# DEMANDE DE BREVET EUROPEEN

(11) **EP 2 610 105 A1**
(43) Date de publication de la demande: **03.07.2013**
(21) Numéro de dépôt: 11290618.5
(22) Date de dépôt: 28.12.2011
(51) Int. Cl.: B60N 2/48, B60N 3/02

(54) **Dispositif de réception d'une poignée au niveau de l'arceau d'un siège de véhicule**

(71) Demandeur: Techno Logistique, 63510 Clermond Ferrand (FR)
(72) Inventeur: Lagouarre, Frédéric, 63114 Montpeyroux (FR)
(74) Mandataire: Célanie, Christian

(57) **Abrégé**

L'invention concerne un dispositif de réception d'une poignée au niveau de l'arceau d'un siège de véhicule.

Il comprend deux demi-coques 5b venues de moulage et formant par assemblage un boîtier de confinement de l'arceau, chaque demi-coque 5b délimitant une empreinte supérieure 15 et une empreinte inférieure 17 de réception des extrémités de la poignée, les demi-coques 5b comportant des moyens de réception 8 de moyens de fixation entre elles, chaque demi-coque 5b délimitant un bord périphérique venant en appui contre les bords libres de l'arceau.

Application à la fabrication d'appuis-tête.

## Description

Le secteur technique de la présente invention est celui des appuis-tête des sièges de véhicules, par exemple terrestres, ferroviaires ou autres.

Généralement, les sièges en question sont surmontés d'un appui-tête incorporant un arceau solidaire d'une poignée que les passagers sont à même d'empoigner afin d'assurer leur équilibre. Cet ensemble est d'une seule pièce car il n'est pas possible de séparer la poignée de l'arceau. Ceci constitue un handicap lorsqu'on souhaite remplacer l'habillage ou bien si l'on souhaite disposer des coloris divers pour la poignée.

Le but de la présente invention est de fournir un dispositif de fixation d'une poignée sur un arceau permettant de séparer ces deux pièces et dont l'habillage réalise l'appui-tête.

L'invention a donc pour objet un dispositif de réception d'une poignée au niveau de l'arceau d'un siège de véhicule et constituant un appui-tête, **caractérisé en ce qu'**il comprend deux demi-coques venues de moulage et formant par assemblage un boîtier de confinement de l'arceau, chaque demi-coque délimitant une empreinte supérieure et une empreinte inférieure de réception des extrémités de la poignée, les demi-coques comportant des moyens de réception de moyens de fixation entre elles, chaque demi-coque délimitant un bord périphérique venant en appui contre les bords libres de l'arceau.

Selon une caractéristique de l'invention, chaque demi-coque délimite côté interne des renflements latéraux, inférieurs et supérieurs pour constituer des moyens de blocage de l'arceau.

Selon une autre caractéristique de l'invention, les moyens de réception sont constitués par des renforcements de matière perforés et les moyens de fixation des tiges boulonnées.

Selon encore une autre caractéristique de l'invention, les renflements latéraux et inférieurs sont constitués par une continuité de matière.

Selon encore une autre caractéristique de l'invention, les renflements supérieurs sont constitués par des doigts de matière venant en correspondance lors de l'assemblage des demi-coques, munis d'une perforation pour la réception d'un moyen de fixation.

Selon encore une autre caractéristique de l'invention, la poignée est munie à ses extrémités libres d'une collerette destinée à s'engager dans une rainure, en ce que les empreintes supérieure et inférieure des demi-coques délimitent des rainures de réception des collerettes.

Selon encore une autre caractéristique de l'invention, les demi-coques sont munies de perforations pour assurer une réduction de leur masse.

Selon encore une autre caractéristique de l'invention, les moyens de réception sont prévus à l'extérieur ou à l'intérieur des demi-coques.

Selon encore une autre caractéristique de l'invention, une enveloppe amortissante de mousse est disposée autour de la coque.

Un tout premier avantage de la présente invention réside dans le fait que la coque sert de support pour le moussage.

Un autre avantage réside dans l'intégration de poignée dans des appuis-tête qui n'étaient pas équipés.

Un autre avantage encore de l'invention réside dans le fait que les coques peuvent être utilisées indifféremment pour une poignée à droite ou à gauche du siège.

Un autre avantage encore réside dans le fait que la forme extérieure de l'appui tête peut être modifiée pour une esthétique différenciée du siège dans son ensemble.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 est une vue montrant l'arceau encastré partiellement dans une demi-coque,
- la figure 2 représente une vue d'une demi-coque, côté externe et la figure 3 la même vue côté interne,
- la figure 4 représente une vue côté interne d'une demi-coque montrant l'emprise des extrémités de la poignée,
- la figure 5 est une vue en coupe de la poignée,
- la figure 6 est une vue illustrant le montage de la poignée dans une demi-coque,
- la figure 7 est une vue côté externe de la demi-coque de la figure 6, et
- la figure 8 est une vue du dispositif représenté en transparence équipé d'une mousse protectrice.

Comme indiqué précédemment, le dispositif de réception vient s'adapter sur un arceau fixé sur la structure du siège du véhicule. Bien entendu, cet arceau peut être fixé a posteriori sur un siège dépourvu d'appui-tête. Ce dispositif de réception offre l'avantage de pouvoir être habillé afin de constituer un appui-tête et recevoir ainsi un moussage.

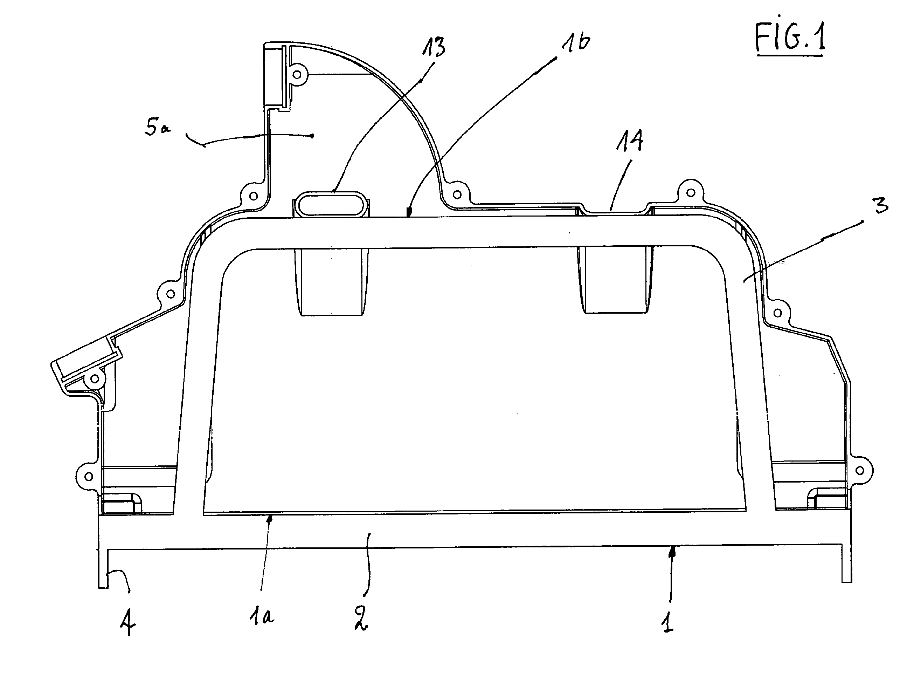

Sur la figure 1, on a représenté une vue montrant un arceau 1 constitué d'une barre rectiligne 2 munie de pattes de fixation 4 au siège du véhicule(non représenté) et d'un cadre 3 fixé à cette barre. En arrière plan de cet arceau, on a représenté une demi-coque 5a qui sera décrite plus complètement ci-après. On voit sur cette figure, que cette demi-coque 5a vient s'adapter sur l'arceau par des éléments de blocage. Les bords libres de la demi-coque 5a viennent en appui contre les bords libres 1a et 1b de l'arceau.

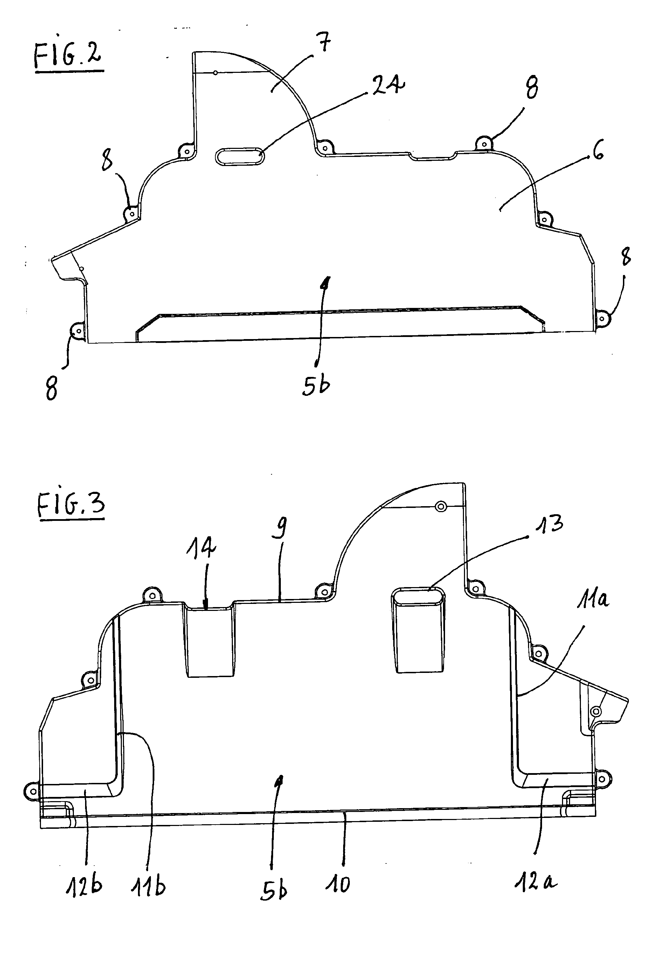

Sur la figure 2, on a représenté une vue de la demi-coque 5b, côté externe, de forme complémentaire de celle de la demi-coque 5a et lors de leur emboîtement elles constituent la coque d'un boîtier fixé rigidement à l'arceau. Les demi-coques 5a et 5b sont pièces en matériau plastique venues de moulage pour constituer un boîtier rigide de confinement de l'arceau. On voit que la demi-coque 5b présente une base 6 généralement rectangulaire surmontée d'un voile 7 globalement sous la forme d'un quart de cercle. On voit encore sur cette figure des moyens de réception 8 de moyens de fixation des demi-coques 5a et 5b.

Sur la figure 3, on a représenté une vue de la demi-coque 5b, côté interne, délimitant un bord périphérique supérieur 9 et un bord périphérique inférieur 10 venant en appui contre les bords libres de l'arceau. Cette demi-coque est munie de surépaisseurs constituant des renflements latéraux 11a et 11b, inférieurs 12a et 12b et supérieurs 13 pour constituer des moyens de blocage du cadre 3 de l'arceau. Les renflements latéraux 11 et inférieurs 12 sont constitués par une continuité de la matière de chaque demi-coque 5a ou 5b. Les renflements supérieurs 13 et 14 sont constitués par des doigts de matière venant en correspondance lors de l'assemblage des demi-coques 5a et 5b, munis d'une perforation 24 pour la réception d'un moyen de fixation.

La demi-coque 5a est munie des mêmes éléments.

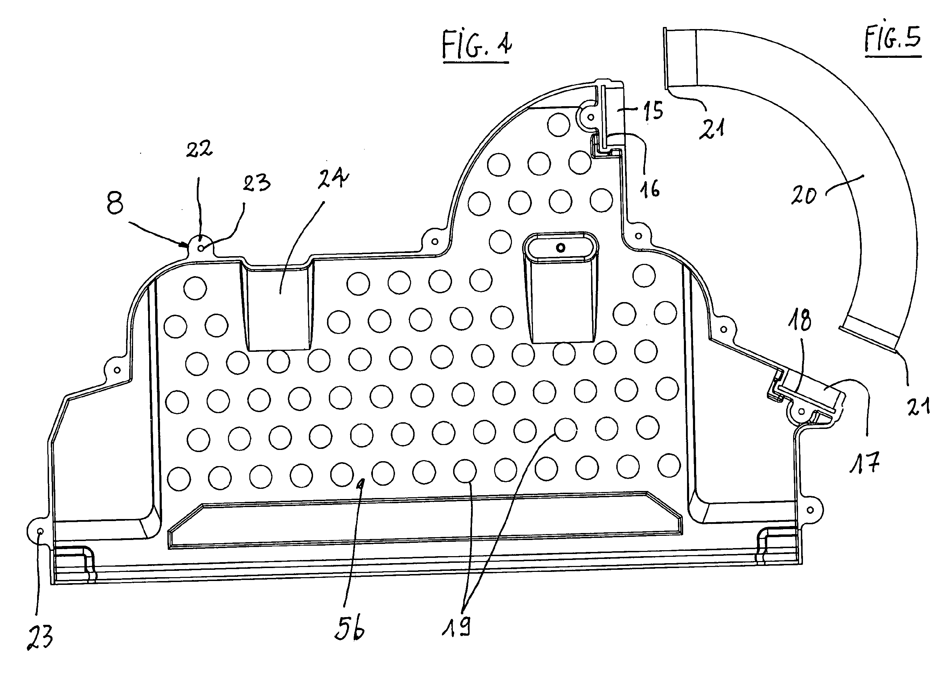

Sur la figure 4, on a représenté une vue plus détaillée de la demi-coque 5b délimitant une empreinte supérieure 15 dans laquelle une rainure 16 est pratiquée et une empreinte inférieure 17 dans laquelle une rainure 18 est pratiquée. On voit que chaque demi-coque peut être munie d'un certain nombre de trous 19 destinée à réduire la masse de matière utilisée.

Chaque demi-coque 5a ou 5b est munie des moyens de réception 8 disposés judicieusement sur leur périphérie. Chaque moyen de réception 8 est constitué par un renforcement de matière 22 qui est muni d'une perforation 23 et constituant un moyen de réception d'un moyen de fixation. Chacun de ces moyens de fixation peut être par exemple une tige boulonnée de part et d'autre de chaque demi-coque.

Sur la figure 5, on a représenté une poignée 20 munie à chacune de ses extrémités d'une collerette 21. Chacune des extrémités de la poignée sera positionnée dans les empreintes 15 et 17 correspondantes et chaque collerette 21 sera positionnée dans les rainures correspondantes 16 et 18 afin de fixer cette poignée dans le dispositif de réception.

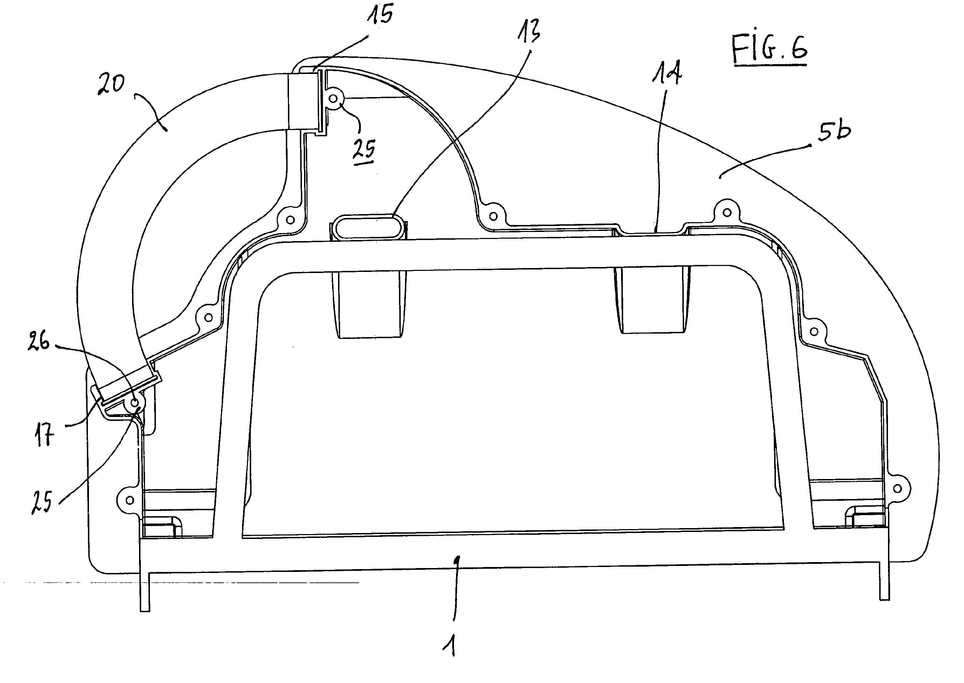

Sur la figure 6, on a représenté une vue de la demi-coque 5b sur laquelle la poignée 20 est positionnée dans les empreintes 15 et 17. Ces deux empreintes sont prolongées côté interne par un renflement de matière 25 muni d'une perforation 26 destinée à recevoir une tige filetée.

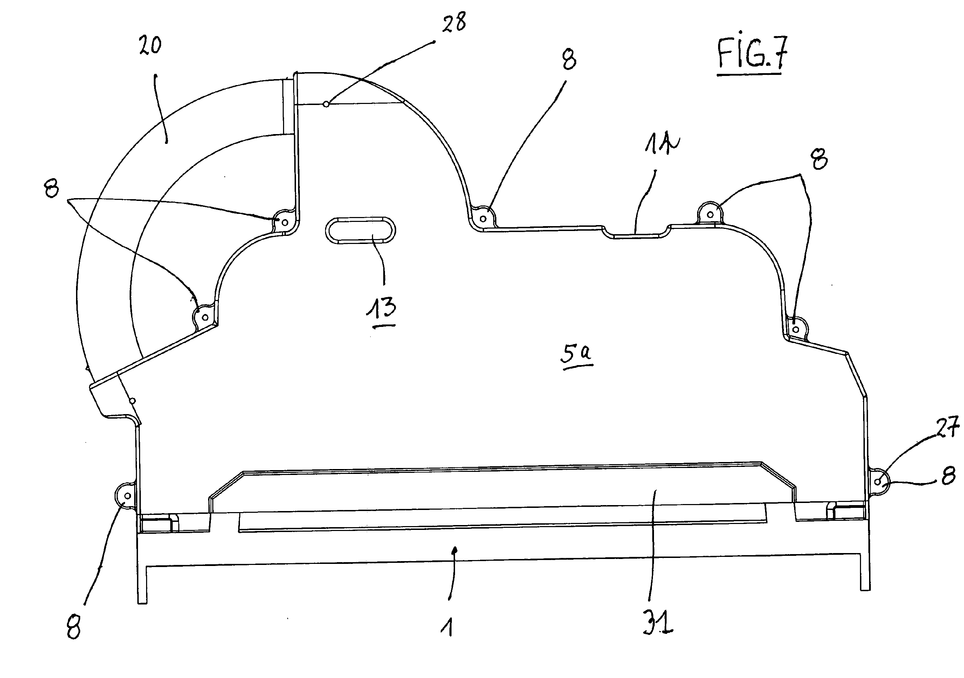

Sur la figure 7, on a représenté une vue du dispositif de réception côté externe montrant la demi-coque 5a dont les moyens de réception 8 sont munis des moyens de fixation 27. Ces moyens de fixation sont par exemple des tiges filetées ou des tiges boulonnées. On voit également le moyen de fixation 28 réunissant les demi-coques 5a et 5b au niveau du renflement de matière 25. La base de chaque demi-coque 5a ou 5b est munie d'un logement borgne 31 pour la réception des bords libres d'un tissu de protection de l'appui-tête afin de les rendre invisibles.

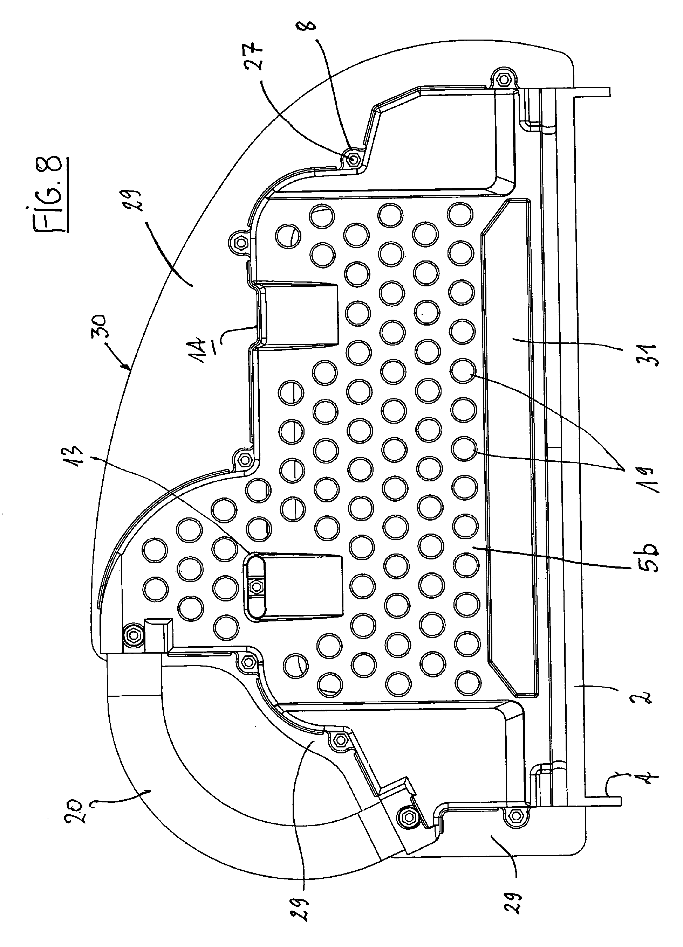

Sur la figure 8, on a représenté une vue en transparence du dispositif de réception qui est complété par une enveloppe amortissante disposée autour de la coque. Il s'agit par exemple d'une épaisseur de mousse 29 appliquée tout autour des demi-coques en épousant leur forme extérieure. Cette couche de mousse peut être recouverte et protégée par un tissu 30 décoratif.

On comprend qu'après moulage des demi-coques 5a et 5b, on place tout d'abord la poignée 20 dans les empreintes 15 et 17 d'une demi-coque et on vient ensuite placer celle-ci sur l'arceau. L'arceau 1 est alors maintenu par les moyens de positionnement constitués par les renflements latéraux, inférieurs et supérieurs afin de bloquer cet arceau. Puis, on place l'autre demi-coque en faisant correspondre les différents moyens de réception 8. On fixe alors les demi-coques à l'aide des différentes tiges 27 et 28. On place ensuite la mousse 29 se présentant soit d'un seul bloc soit en deux parties. On place enfin le tissu décoratif 30 autour de la mousse.

Une autre solution consiste à injecter la mousse. Pour cela, on disposé les demi-coques assemblées 5a et 5b avec l'arceau 1 dans un moule à injection dans lequel la mousse est injectée autour de celles-ci et cette mousse est ensuite polymérisée. L'appui tête ainsi terminé est recouvert à l'aide du tissu décoratif.

## Revendications

1. Dispositif de réception d'une poignée (20) au niveau de l'arceau (1) d'un siège de véhicule, **caractérisé en ce qu**'il comprend deux demi-coques (5a, 5b) venues de moulage et formant par assemblage un boîtier de confinement de l'arceau, chaque demi-coque (5a, 5b) délimitant une empreinte supérieure (15) et une empreinte inférieure (17) de réception des extrémités de la poignée (20), les demi-coques (5a, 5b) comportant des moyens de réception (8) de moyens de fixation (27) entre elles, chaque demi-coque (5a, 5b) délimitant un bord périphérique venant en appui contre les bords libres de l'arceau (1).

2. Dispositif de réception d'une poignée (20) selon la revendication 1, **caractérisé en ce que** chaque demi-coque (5a, 5b) délimite côté interne des renflements latéraux (11), inférieurs (12) et supérieurs (13) pour constituer des moyens de blocage de l'arceau (1).

3. Dispositif de réception d'une poignée (20) selon la revendication 2, **caractérisé en ce que** les moyens de réception (8) sont constitués par des renforcements de matière perforés et les moyens de fixation (27) des tiges filetées ou boulonnées.

4. Dispositif de réception d'une poignée (20) selon la revendication 2 ou 3, **caractérisé en ce que** les renflements latéraux (11) et inférieurs (12) sont constitués par une continuité de matière.

5. Dispositif de réception d'une poignée (20) selon l'une des revendications 2 à 4, **caractérisé en ce que** les renflements supérieurs (13) sont constitués par des doigts de matière venant en correspondance lors de l'assemblage des demi-coques (5a, 5b), munis d'une perforation (23) pour la réception d'un moyen de fixation (27).

6. Dispositif de réception d'une poignée (20) selon l'une quelconque des revendications précédentes, **caractérisé en ce que** la poignée (20) est munie à chacune de ses extrémités libres d'une collerette (21), **en ce que** les empreintes supérieure (15) et inférieure (17) des demi-coques délimitent des rainures (16, 18) de réception des collerettes (21).

7. Dispositif de réception d'une poignée (20) selon l'une quelconque des revendications précédentes, **caractérisé en ce que** les demi-coques (5a, 5b) sont munies de perforations (19) pour assurer une réduction de leur masse.

8. Dispositif de réception d'une poignée (20) selon l'une quelconque des revendications précédentes, **caractérisé en ce que** les moyens de réception (8) sont prévus à l'extérieur ou à l'intérieur des demi-coques (5a, 5b).

9. Dispositif de réception d'une poignée (20) selon l'une quelconque des revendications précédentes, **caractérisé en ce qu'**une enveloppe amortissante de mousse (28) est disposée autour de la coque.
